# FASCICULE DE BREVET EUROPEEN

(11) **EP 3 257 703 B1**
(45) Date de publication et mention de la délivrance du brevet: **26.06.2019**
(21) Numéro de dépôt: 17173341.3
(22) Date de dépôt: 30.05.2017
(51) Int. Cl.: B60N 2/015, B60N 2/01, B60N 2/24, B60N 2/42, B61D 33/00, B64D 11/06

(54) **VEHICULE DE TRANSPORT DE VOYAGEURS COMPRENANT UN DISPOSITIF D'ASSISE SUSPENDU**
TRANSPORTFAHRZEUG FÜR REISENDE, DAS EINE AUFGEHÄNGTE SITZVORRICHTUNG UMFASST
PASSENGER TRANSPORT VEHICLE COMPRISING A SUSPENDED SEATING DEVICE

(30) Priorité: 14.06.2016 FR 1655478
(43) Date de publication de la demande: 20.12.2017
(73) Titulaire: SNCF Mobilités, 93200 Saint-Denis (FR)
(72) Inventeur: LEPAGE, Pascal, 72000 LE MANS (FR)
(74) Mandataire: Argyma

(56) Documents cités:
- DE-A1-102014 215 205
- GB-A- 2 465 212
- JP-A- 2002 104 040

## Description

### DOMAINE TECHNIQUE GENERAL ET ART ANTERIEUR

La présente invention concerne le domaine des véhicules de transport de voyageurs, en particulier, la fixation des sièges dans un train, un bus, un bateau, un avion, etc.

Un véhicule ferroviaire de transport de voyageurs comporte, de manière classique, un châssis structural monté sur des essieux équipés de roues destinées à entrer en contact avec les rails d'une voie ferroviaire. Le châssis structural s'étend longitudinalement selon un axe longitudinal et latéralement selon un axe latéral, c'est-à-dire, orthogonal audit axe longitudinal. Un plancher est monté à l'intérieur du châssis structural afin d'accueillir les voyageurs du véhicule ferroviaire. De plus, le véhicule ferroviaire comporte des sièges, destinés au confort des voyageurs, qui sont fixés sur le plancher. De manière connue, les sièges sont regroupés en rangées espacées selon la direction longitudinale du châssis. Chaque rangée de sièges s'étend ainsi latéralement et comporte généralement deux ensembles de sièges séparés par un couloir de circulation. Les sièges comportent des pieds qui sont fixés au plancher par un système de rail. En pratique, il est complexe d'intégrer un tel système de rail au plancher du véhicule ferroviaire. De plus, la présence des pieds sous les sièges encombre l'espace sous les sièges, ce qui réduit l'espace dédié au rangement et rend complexe le nettoyage du plancher. De plus, lors de la réfection du plancher, il est nécessaire de démonter les sièges qui y sont fixés, ce qui rend une telle opération de maintenance complexe, chronophage et coûteuse.

Aussi, il a été proposé de fixer des sièges dans le châssis au moyen d'un système de porte à faux, connu de l'homme du métier sous la désignation anglaise « cantilever ». Un tel système permet de fixer un siège ou un ensemble de siège en porte-à-faux, notamment depuis une paroi latérale du véhicule ferroviaire. Cependant, un tel système nécessite d'être fixé au châssis structural au niveau d'une poutre dont la section est importante afin de résister aux efforts mécaniques appliqués au siège. L'utilisation d'une poutre de section importante encombre l'espace sur le côté du siège et entraîne les inconvénients cités précédemment. Le document DE-A-102014215205 montre un véhicule de transport de voyageurs selon la première partie de la revendication 1.

Un des objectifs de la présente invention est de proposer un nouveau type de véhicule de transport de voyageurs dans lequel la fixation des sièges permet de libérer l'espace sous les sièges afin d'optimiser de manière simple et peu onéreuse l'espace intérieur du véhicule ferroviaire.

### PRESENTATION GENERALE DE L'INVENTION

A cet effet, l'invention concerne un véhicule de transport de voyageurs, de préférence ferroviaire, comprenant :
- un châssis structural s'étendant longitudinalement et comprenant au moins un espace intérieur adapté pour accueillir des voyageurs, ledit espace intérieur définissant une paroi de plancher et une paroi de plafond, et
- au moins un dispositif d'assise, comprenant un module de siège, fixé au châssis structural.

L'invention est remarquable en ce que ledit au moins un dispositif d'assise comporte au moins un organe de suspension reliant ledit module de siège à ladite paroi de plafond selon un point de fixation haut de manière à suspendre ledit module de siège.

Grâce au véhicule selon l'invention, les sièges du véhicule peuvent être suspendus dans le véhicule, ce qui permet de libérer de l'espace de rangement sous les sièges. De plus, la suspension des sièges permet d'éviter la fixation des sièges au plancher du véhicule, ce qui rend aisé le nettoyage sous les sièges. De plus, la maintenance et/ou la rénovation du plancher sous les sièges ne nécessite pas le démontage des sièges du fait de l'absence de fixation des sièges au plancher, ce qui rend de telles opérations aisées et rapides.

De préférence, la paroi de plafond comprend des moyens de fixation intégrés dans ladite paroi de plafond et adaptés pour coopérer avec l'organe de suspension afin de permettre une fixation de qualité du dispositif d'assise à la paroi de plafond et cela sans endommagement de la paroi de plafond.

Avantageusement, les moyens de fixation s'étendent selon l'axe longitudinal du châssis structural afin de permettre de régler longitudinalement la position d'un dispositif d'assise suspendu aux moyens de fixation et ainsi de modifier l'aménagement intérieur du véhicule en déplaçant longitudinalement le dispositif d'assise.

De préférence, les moyens de fixation comprennent au moins un rail de fixation adapté pour coopérer avec l'organe de suspension. Ainsi, un rail de fixation permet de régler la position d'un dispositif d'assise selon l'axe du rail.

De préférence encore, le rail de fixation comprend une fente, et l'organe de suspension est adapté pour coopérer avec ladite fente afin de fixer de manière aisée le dispositif d'assise au rail.

De manière préférée, le véhicule comprend une pluralité de dispositifs d'assise, dont chacun est fixé auxdits moyens de fixation de la paroi de plafond. Ainsi, les moyens de fixation permettent de suspendre une pluralité de dispositifs d'assise dans le véhicule.

Avantageusement, l'espace intérieur définit au moins deux parois latérales, et le dispositif d'assise comprend un organe de fixation latérale adapté pour verrouiller le dispositif d'assise à une desdites parois latérales et ainsi bloquer tout mouvement latéral du dispositif d'assise suspendu.

De manière préférée, la paroi latérale comporte également des moyens de fixation qui s'étendent, de préférence, selon l'axe longitudinal du châssis structural afin de bloquer tout mouvement latéral du dispositif d'assise suspendu tout en permettant de régler longitudinalement la position du dispositif d'assise et ainsi de modifier l'aménagement intérieur du véhicule en déplaçant longitudinalement le dispositif d'assise. De préférence encore, les moyens de fixation se présentent sous la forme d'un rail.

Avantageusement, le dispositif d'assise ne comprend qu'un organe de suspension et qu'un organe de fixation latérale, ce qui rend le montage/démontage du dispositif d'assise aisé et rapide.

De préférence, le dispositif d'assise ne comprend pas d'organe de fixation à la paroi de plancher afin de libérer l'espace sous les sièges du dispositif d'assise et ainsi permettre d'utiliser cet espace libre, notamment pour le rangement. L'absence d'organe de fixation à la paroi de plancher rend également aisés le nettoyage et la rénovation de la paroi de plancher et cela sans démontage des sièges.

De manière préférée, le dispositif d'assise comprend un module de rangement de bagages relié à l'organe de suspension afin de permettre aux voyageurs de ranger leurs bagages au-dessus de leur siège.

Avantageusement, le châssis comprend au moins un deuxième espace intérieur, et le véhicule ferroviaire comprend au moins un dispositif d'assise suspendu à la paroi de plafond dudit deuxième espace intérieur. Ainsi, dans le cas d'un véhicule à plusieurs niveaux, des dispositifs d'assise peuvent être suspendus à chaque niveau.

De préférence, le dispositif d'assise est monté de manière amovible au châssis structural afin de rendre aisé et rapide l'aménagement intérieur du véhicule en remplaçant et/ou en déplaçant le dispositif d'assise.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une vue en coupe transversale d'un véhicule ferroviaire à deux niveaux selon une forme de réalisation de l'invention en configuration intérieure dite de première classe,
- la figure 2 est une vue partielle de la fixation d'un siège dans le véhicule de la figure 1,
- la figure 3 est une vue en coupe transversale d'un véhicule ferroviaire à deux niveaux selon une deuxième forme de réalisation de l'invention en configuration intérieure dite de seconde classe, et
- la figure 4 est une vue en coupe longitudinale partielle du véhicule ferroviaire de la figure 2.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN ŒUVRE

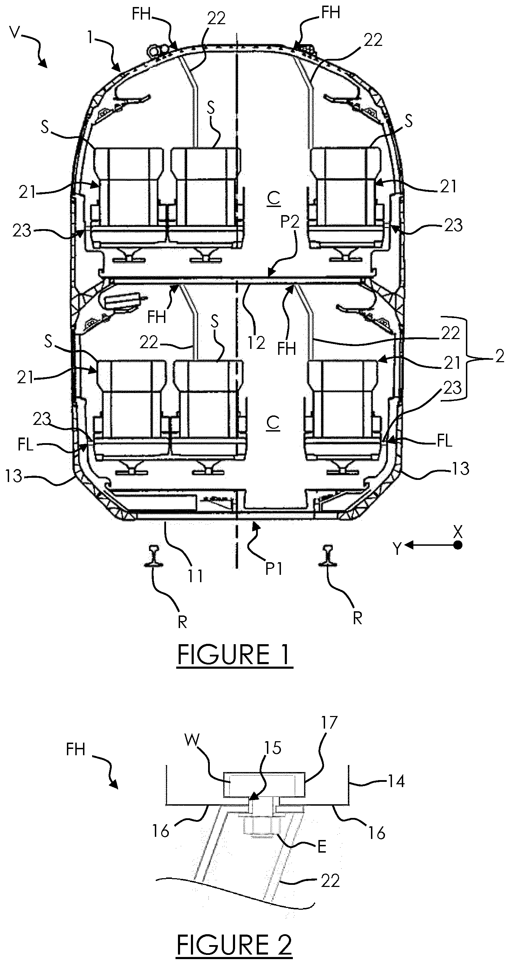

En référence à la figure 1, il est représenté de manière schématique un véhicule ferroviaire V pour le transport de voyageurs destiné à circuler sur les rails R d'une voie ferroviaire.

Le véhicule ferroviaire V comprend un châssis structural 1 et une pluralité de dispositifs d'assise 2, comportant un ou plusieurs sièges S, montés sur ledit châssis structural 1 afin d'accueillir des voyageurs.

Le châssis structural 1 est monté sur des essieux équipés de roues (non représentées) destinées à entrer en contact avec les rails R de la voie ferroviaire.

Le châssis structural 1 s'étend longitudinalement selon un axe longitudinal X et latéralement selon un axe latéral Y, orthogonal audit axe longitudinal X. Dans cet exemple, le châssis structural 1 est réalisé en aluminium de manière à limiter la masse du châssis 1. Néanmoins, il va de soi que d'autres matériaux pourraient convenir, en particulier, de l'acier. Le châssis structural 1 est également connu de l'homme du métier sous la désignation de « caisse » ou « chaudron ».

Dans la forme de réalisation représentée à la figure 1, le châssis structural 1 est à deux niveaux, également désigné « duplex », et comprend ainsi une plateforme inférieure P1 et une plateforme supérieure P2 sur chacune desquelles est montée une pluralité de dispositifs d'assise 2. Par soucis de clarté, l'espace intérieur des plateformes P1, P2 étant relativement similaire, seul l'espace intérieur de la plateforme inférieure P1 sera décrit dans la suite de la description.

En référence à la figure 1, au niveau de la plateforme inférieure P1, le châssis structural 1 comprend un espace inférieur définissant une première paroi horizontale, également désignée paroi de plancher 11, une deuxième paroi horizontale, également désignée paroi de plafond 12, et au moins deux parois verticales, également désignées parois latérales 13. La plateforme supérieure P2 est montée au-dessus de la plateforme inférieure P1 de sorte que la paroi de plancher de la plateforme supérieure P2 forme la paroi de plafond 12 de la plateforme inférieure P1.

Le châssis structural 1 comprend des points de fixation FH, FL au niveau desquels les dispositifs d'assise 2 sont fixés au châssis structural 1. Dans cet exemple, chaque dispositif d'assisse 2 est relié au châssis structural 1 selon deux points de fixation : un point de fixation haut FH, situé sur la paroi de plafond 12, et un point de fixation latéral FL situé, sur une paroi latérale 13. Il va de soi qu'un dispositif d'assise 2 pourrait ne comprendre que deux points de fixation hauts, plus de deux points de fixation hauts ou un unique point de fixation haut.

Pour fixer un dispositif d'assise 2 au châssis structural 1, le châssis structural 1 comprend, au niveau de chaque point de fixation FH, FL, des moyens de fixation adaptés pour coopérer avec le dispositif d'assise 2 qui sont intégrés dans la paroi de plafond 12. Dans cet exemple, les moyens de fixation comprennent un rail de fixation 14 comme illustré à la figure 2. De préférence, le châssis structural 1 comprend trois rails de fixation 14 par plateforme P1, P2 : un rail de fixation 14 haut situé sur la paroi de plafond 12 et qui s'étend selon l'axe longitudinal X, et deux rails de fixation 14 latéraux situés sur chacune des parois latérales 13 et qui s'étendent selon l'axe longitudinal X, de préférence sous une fenêtre (non représentée) du châssis structural 1. Ainsi, un dispositif d'assise 2 est fixé au châssis structural 1 par deux rails de fixation 14 : un rail de fixation haut 14 et un rail de fixation latéral 14.

Chaque rail de fixation 14 se présente sous la forme d'un corps allongé creux de section rectangulaire et dont une face, sur laquelle un dispositif d'assise 2 est destiné à être fixé, comporte une fente 15 s'étendant selon la longueur du rail de fixation 14. La face de fixation du rail de fixation 14 comporte ainsi deux parois 16 séparées par la fente 15. Un tel rail de fixation 14 est connu de l'homme du métier sous la désignation de profilé avec rainure en T.

Chaque rail de fixation 14 est fixé solidairement au châssis structural 1 via une face opposée à la face de fixation, notamment par soudure. En particulier, le rail de fixation 14 haut est fixé solidairement à la paroi de plafond 12 et chaque rail de fixation 14 latéral est fixé solidairement à une paroi latérale 13.

Comme cela sera présenté par la suite, les rails de fixation 14 forment des moyens de fixation universelle autorisant le montage de plusieurs types de dispositifs d'assise 2. En outre, la position longitudinale d'un dispositif d'assise 2 dans le châssis structural 1 peut être avantageusement réglée du fait que les rails de fixation 14 s'étendent selon l'axe longitudinal X du châssis structural 1.

Une pluralité de dispositifs d'assise 2 est fixée au châssis structural 1 dans l'espace intérieur afin de permettre à des passagers de s'assoir à l'intérieur du véhicule ferroviaire V.

Un dispositif d'assise 2 comprend un module de siège 21 comportant un ou plusieurs sièges S, un organe de suspension 22 dudit module de siège 21 au châssis structural 1 et un organe de fixation latérale 23 dudit module de siège 21 au châssis structural 1.

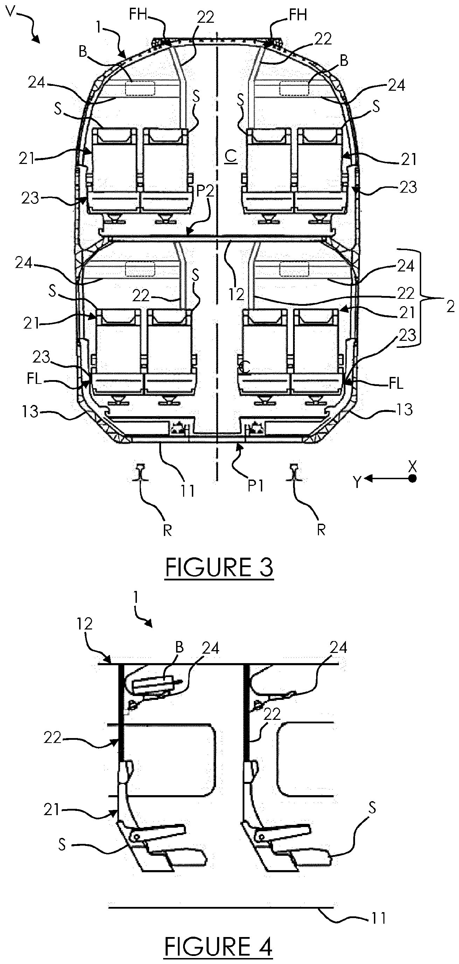

Le véhicule ferroviaire V comprend une pluralité de sièges S regroupés en rangées espacées selon l'axe longitudinal X du châssis 1. Chaque rangée de sièges S s'étend ainsi transversalement selon l'axe latéral Y du châssis 1 et comporte généralement deux modules de siège 21 séparés par un couloir de circulation C. La position et la largeur du couloir de circulation C peuvent varier d'un véhicule ferroviaire V à un autre, notamment selon qu'il s'agit d'un véhicule ferroviaire V de seconde classe ou d'un véhicule ferroviaire V de première classe. A titre d'exemple, un véhicule V de seconde classe comporte généralement, pour chaque rangée de sièges S, deux modules de siège 21, comprenant deux sièges S (configuration 2+2), séparés par un couloir de circulation C centré, de largeur standard, comme illustré à la figure 3, tandis qu'un véhicule V de première classe comporte généralement, pour chaque rangée de sièges S, un module de siège 21 comprenant deux sièges S et un module de siège 21 comprenant un unique siège S (configuration 2+1), les modules de siège 21 étant séparés par un couloir de circulation C qui est décalé par rapport au centre du châssis structural 1, comme illustré sur la figure 1, et dont la largeur est augmentée par comparaison à un véhicule V de seconde classe.

Dans cet exemple, chaque module de siège 21 est fixé au châssis structural 1 au niveau d'un point de fixation haut FH et d'un point de fixation latéral FL.

Un organe de suspension 22 permet de suspendre un module de siège 21 à la paroi de plafond 12 au niveau du point de fixation haut FH.

Un organe de suspension 22 s'étend verticalement entre le point de fixation haut FH et un module de siège 21. Dans cet exemple, comme illustré à la figure 2, l'organe de suspension 22 se présente sous la forme d'un tube creux. L'organe de suspension 22 est réalisé en un matériau qui présente une résistance mécanique importante.

L'organe de suspension 22 comprend, au niveau d'une extrémité supérieure, des moyens de coopération avec les moyens de fixation du châssis structural 1, en particulier, avec un rail de fixation 14 haut. Dans cet exemple, en référence à la figure 2, les moyens de coopération se présentent sous la forme d'une vis W s'étendant en saillie du tube et traversant la fente 15 du rail de fixation 14. La tête de la vis W est montée dans le creux 17 du rail de fixation 14 et un écrou E permet de serrer la vis W afin de fixer l'organe de suspension 22 au rail de fixation 14. Il va de soi que d'autres moyens de coopération pourraient convenir en fonction de la nature des moyens de fixation de la paroi de plafond 12.

L'organe de suspension 22 est fixé, au niveau d'une extrémité inférieure, à un module de siège 21, par exemple par vissage. Ainsi, le module de siège 21 est suspendu à la paroi de plafond 12 par l'organe de suspension 22.

Un organe de fixation latérale 23 permet de fixer latéralement un module de siège 21 à une paroi latérale 13 au niveau du point de fixation latéral FL.

L'organe de fixation latérale 23 est adapté pour coopérer avec un rail de fixation latéral 14, par exemple par un système de vis tel que décrit précédemment. L'organe de fixation latérale 23 est en outre adapté pour être fixé à un module de siège 21 afin de fixer ce dernier au rail de fixation latéral 14. Le module de siège 21 est ainsi bloqué latéralement par l'organe de fixation latéral 23. De plus, l'organe de fixation latérale 23 permet de bloquer le module de siège 21 longitudinalement afin d'empêcher tout mouvement du module de siège 21 suspendu à la paroi de plafond 12.

De manière préférée, le dispositif d'assise 2 est dépourvu d'organe de fixation à un plancher de manière à libérer de l'espace au sol.

Comme illustré sur les figures 3 et 4, le dispositif d'assise 2 comprend en outre un module de rangement de bagages 24 adapté pour permettre aux voyageurs de ranger des bagages B à l'intérieur du véhicule ferroviaire V. Un tel module de rangement 24 forme ainsi un espace de rangement dans l'espace intérieur du véhicule ferroviaire V.

Le module de rangement de bagages 24 s'étend transversalement selon l'axe latéral Y au-dessus du module de siège 21. Avantageusement, le module de rangement de bagages 24 est fixé, d'une part à une paroi latérale 13 du châssis structural 1 et, d'autre part, à l'organe de suspension 22 du dispositif d'assise 2.

Le module de rangement 24 forme ainsi un espace de rangement latéral à l'intérieur du véhicule ferroviaire V plus important qu'un espace de rangement longitudinal selon l'art antérieur. De plus, les voyageurs peuvent ranger leurs bagages B dans le module de rangement 24 situé au-dessus de leur siège S, ce qui permet d'augmenter la sécurité des bagages B à l'intérieur du véhicule ferroviaire V.

Le dispositif d'assise 2 peut également comprendre des équipements électriques, tels que, par exemple, un écran d'affichage, un dispositif d'éclairage lumineux, etc. Le dispositif d'assise 2 comprend alors un réseau d'alimentation électrique adapté pour relier chaque équipement électrique au réseau d'alimentation en énergie électrique du véhicule ferroviaire V. Avantageusement, un tel réseau d'alimentation peut être intégré dans l'organe de suspension 22 afin de minimiser l'impact visuel.

Le dispositif d'assise 2 peut en outre comprendre d'autres équipements, tels que, par exemple, la numérotation des sièges S, une patère, une séparation amovible entre un siège S et le couloir C, des moyens de préhension auxquels un voyageur peut s'appuyer lors d'un déplacement dans le couloir C, etc. De tels équipements peuvent avantageusement être intégrés dans l'organe de suspension 22 afin de limiter leur encombrement et augmenter leur efficacité.

Il va maintenant être présenté un exemple de mise en oeuvre d'un procédé d'aménagement intérieur du véhicule ferroviaire V selon l'invention. Dans cet exemple, l'aménagement de type première classe (Figure 1) d'un véhicule ferroviaire V est modifié en un aménagement de type seconde classe (Figure 3).

Comme présenté précédemment, selon le type d'aménagement, le nombre de sièges S par module de siège 21, ainsi que la position et la taille du couloir de circulation C varient. Grâce à l'invention, il est possible de remplacer un dispositif d'assise 2 par un nouveau dispositif d'assise 2 comprenant un nombre différent de sièges S afin de modifier l'aménagement intérieur de manière simple et pratique.

Pour changer un dispositif d'assise 2, ce dernier est démonté du châssis structural 1, notamment par dévissage de l'organe de suspension 22 et de l'organe de fixation latérale 23 au niveau de leurs points de fixation FH, FL.

Puis, un nouveau dispositif d'assise 2 est monté en lieu et place de l'ancien dispositif d'assise 2 : l'organe de suspension 22 et l'organe de fixation latérale 23 du nouveau dispositif d'assise 2 étant fixés au châssis structural 1 au niveau des mêmes point de fixation FH, FL. Ainsi, grâce à la fixation du dispositif d'assise 2 par suspension, un dispositif d'assise 2 peut être remplacé de manière pratique, ce qui rend aisé et rapide l'aménagement intérieur du véhicule V. En outre, grâce aux rails de fixation 14, la position longitudinale d'un dispositif d'assise 2 peut être réglée, ce qui est très avantageux.

De plus, grâce à la suspension du dispositif d'assise 2, l'espace sous les sièges S est libre, ce qui permet d'utiliser un tel espace, notamment pour le rangement ou pour un chien d'aveugle. L'augmentation des espaces de rangement à l'intérieur du véhicule V permet ainsi de limiter les espaces de rangement collectif et ainsi d'optimiser le nombre de sièges S à l'intérieur du véhicule V.

De même, l'absence de fixation des sièges S à la paroi de plancher 11 rend le nettoyage de la paroi de plancher 11 aisé et rapide et permet de rénover la paroi de plancher 11 sans démontage des sièges S, ce qui rend une telle opération de rénovation rapide et aisée.

L'invention a été présentée pour un véhicule ferroviaire V du type duplex, mais elle s'applique à tout type de véhicule ferroviaire, en particulier, un véhicule ferroviaire ne comportant qu'un seul niveau. De manière générale, l'invention s'applique à tout type de véhicule de transport de voyageurs, en particulier, un bus, un avion, un bateau ou analogue.

## Revendications

1. Véhicule (V) de transport de voyageurs, de préférence ferroviaire, comprenant :
- un châssis structural (1) s'étendant longitudinalement et comprenant au moins un espace intérieur adapté pour accueillir des voyageurs, ledit espace intérieur définissant une paroi (11) de plancher, une paroi (12) de plafond et au moins deux parois latérales (13), et
- au moins un dispositif d'assise (2), comprenant un module de siège (21), fixé au châssis structural (1),
ledit au moins un dispositif d'assise (2) comportant au moins un organe de suspension (22) reliant ledit module de siège (21) à ladite paroi de plafond (12) selon un point de fixation haut (FH) de manière à suspendre ledit module de siège (21), et un organe de fixation latérale (23), **caractérisé en ce que** l' organe de fixation latérale (23) est adapté pour verrouiller le dispositif d'assise (2) à une desdites parois latérales (13).

2. Véhicule (V) selon la revendication 1, dans lequel la paroi de plafond (12) comprend des moyens de fixation intégrés dans ladite paroi de plafond (12) et adaptés pour coopérer avec l'organe de suspension (22).

3. Véhicule (V) selon la revendication 2, dans lequel les moyens de fixation s'étendent selon l'axe longitudinal (X) du châssis structural (1).

4. Véhicule (V) selon l'une des revendications 2 à 3, dans lequel les moyens de fixation comprennent au moins un rail de fixation (14) adapté pour coopérer avec l'organe de suspension (22).

5. Véhicule (V) selon l'une des revendications 2 à 4, comprenant une pluralité de dispositifs d'assise (2) dont chacun est fixé auxdits moyens de fixation de la paroi de plafond (12).

6. Véhicule (V) selon l'une des revendications précédentes, dans lequel le dispositif d'assise (2) ne comprend qu'un organe de suspension (22) et qu'un organe de fixation latérale (23).

7. Véhicule (V) selon l'une des revendications précédentes, dans lequel le dispositif d'assise (2) comprend un module de rangement de bagages (24) relié à l'organe de suspension (22).

8. Véhicule (V) selon l'une des revendications précédentes, dans lequel le châssis (1) comprend au moins un deuxième espace intérieur et le véhicule ferroviaire (V) comprend au moins un dispositif d'assise (2) suspendu à la paroi de plafond (12) dudit deuxième espace intérieur.

9. Véhicule (V) selon l'une des revendications précédentes, dans lequel le dispositif d'assise (2) est monté de manière amovible au châssis structural (1).

## Patentansprüche

1. Transportfahrzeug (V) für Reisende, vorzugsweise Schienentransportfahrzeug, umfassend:
- einen Strukturrahmen (1), der sich längs erstreckt und mindestens einen Innenraum, der für die Aufnahme der Reisenden geeignet ist, umfasst, wobei der Innenraum eine Bodenwand (11), eine Deckenwand (12) und mindestens zwei Seitenwände (13) definiert, und
- mindestens eine Sitzvorrichtung (2), umfassend ein Sitzmodul (21), die am Strukturrahmen (1) befestigt ist,
wobei die mindestens eine Sitzvorrichtung (2) mindestens ein Aufhängungsorgan (22) aufweist, welches das Sitzmodul (21) mit der Deckenwand (12) gemäß einem hohen Befestigungspunkt (FH) derart verbindet, dass das Sitzmodul (21) aufgehängt wird, und ein seitliche Befestigungsorgan (23) **dadurch gekennzeichnet, dass** das seitliche Befestigungsorgan (23) zum Verriegeln der Sitzvorrichtung (2) an einer der Seitenwände (13) geeignet ist.

2. Fahrzeug (V) nach Anspruch 1, wobei die Deckenwand (12) Befestigungsmittel umfasst, die in die Deckenwand (12) integriert und zum Zusammenwirken mit dem Aufhängungsorgan (22) geeignet sind.

3. Fahrzeug (V) nach Anspruch 2, wobei sich die Befestigungsmittel gemäß der Längsachse (X) des Strukturrahmens (1) erstrecken.

4. Fahrzeug (V) nach einem der Ansprüche 2 bis 3, wobei die Befestigungsmittel mindestens eine Befestigungsschiene (14) umfassen, die zum Zusammenwirken mit dem Aufhängungsorgan (22) geeignet ist.

5. Fahrzeug (V) nach einem der Ansprüche 2 bis 4, umfassend eine Vielzahl von Sitzvorrichtungen (2), von denen jede an den Befestigungsmitteln der Deckenwand (12) befestigt ist.

6. Fahrzeug (V) nach einem der vorangehenden Ansprüche, wobei die Sitzvorrichtung (2) nur ein Aufhängungsorgan (22) und nur ein seitliches Befestigungsorgan (23) umfasst.

7. Fahrzeug (V) nach einem der vorangehenden Ansprüche, wobei die Sitzvorrichtung (2) ein mit dem Aufhängungsorgan (22) verbundenes Gepäckverstaumodul (24) umfasst.

8. Fahrzeug (V) nach einem der vorangehenden Ansprüche, wobei der Rahmen (1) mindestens einen zweiten Innenraum umfasst und das Schienenfahrzeug (V) mindestens eine an der Deckenwand (12) des zweiten Innenraums aufgehängte Sitzvorrichtung (2) umfasst.

9. Fahrzeug (V) nach einem der vorangehenden Ansprüche, wobei die Sitzvorrichtung (2) lösbar am Strukturrahmen (1) angebracht ist.

## Claims

1. Vehicle (V) for transporting travellers, preferably a rail vehicle, comprising:
- a structural chassis (1) extending longitudinally and comprising at least one inner space suitable for receiving travellers, said inner space defining a floor wall (11), a ceiling wall (12) and at least two side walls (13), and
- at least one seat device (2), comprising a seat module (21), secured to the structural chassis (1),
said at least one seat device (2) comprising at least one suspension member (22) connecting said seat module (21) to said ceiling wall (12) along a high securing point (FH) so as to suspend said seat module (21), and a side securing member (23) **characterised in that** the side securing member (23) is suitable for locking the seat device (2) to one of said side walls (13).

2. Vehicle (V) according to claim 1, wherein the ceiling wall (12) comprises integrated securing means in said ceiling wall (12) and suitable for cooperating with the suspension member (22).

3. Vehicle (V) according to claim 2, wherein the securing means extend along the longitudinal axis (X) of the structural chassis (1).

4. Vehicle (V) according to one of claims 2 to 3, wherein the securing means comprise at least one securing rail (14) suitable for cooperating with the suspension member (22).

5. Vehicle (V) according to one of claims 2 to 4, comprising a plurality of seat devices (2), each of which is secured to said securing means of the ceiling wall (12).

6. Vehicle (V) according to one of the preceding claims, wherein the seat device (2) only comprises one suspension member (22) and one side securing member (23).

7. Vehicle (V) according to one of the preceding claims, wherein the seat device (2) comprises a luggage storage module (24) connected to the suspension member (22).

8. Vehicle (V) according to one of the preceding claims, wherein the chassis (1) comprises at least one second inner space and the rail vehicle (V) comprises at least one seat device (2) suspended to the ceiling wall (12) of said second inner space.

9. Vehicle (V) according to one of the preceding claims, wherein the seat device (2) is mounted so that is can be removed from the structural chassis (1).
